# EUROPÄISCHE PATENTSCHRIFT

(11) **EP 2 903 476 B1**
(45) Veröffentlichungstag und Bekanntmachung des Hinweises auf die Patenterteilung: **04.10.2017**
(21) Anmeldenummer: 13783466.9
(22) Anmeldetag: 31.07.2013
(51) Int. Cl.: A45D 31/00, B29C 70/50, B29L 31/00, B29K 67/00

(54) **KÜNSTLICHES NAGELPRÄPARAT SOWIE VERFAHREN UND VORRICHTUNG ZU DESSEN HERSTELLUNG**
ARTIFICIAL NAIL PREPARATION, AND METHOD AND DEVICE FOR PRODUCING SAME
PRÉPARATION POUR ONGLES ARTIFICIELS ET PROCÉDÉ ET DISPOSITIF DE PRODUCTION DE LADITE PRÉPARATION

(30) Priorität: 03.08.2012 DE 102012015207
(43) Veröffentlichungstag der Anmeldung: 12.08.2015
(73) Patentinhaber: Ross Nails UG & Co. KG, 27798 Hude (DE)
(72) Erfinder: KRUSE, Olaf, 27798 Hude (DE)
(74) Vertreter: Jabbusch, Matthias
(86) Internationale Anmeldenummer: PCT/DE2013/000419
(87) Internationale Veröffentlichungsnummer: WO 2014/019568

(56) Entgegenhaltungen:
- DE-A1- 3 620 568
- FR-A1- 2 846 861
- US-A- 4 860 774
- US-B1- 7 185 660

## Beschreibung

Die Erfindung betrifft ein künstliches Nagelpräparat mit wenigstens einer Kunstharzlage und einem in die Kunstharzlage eingegossenen textilen Flächengebilde. Außerdem betrifft die Erfindung ein Verfahren zum Herstellen eines künstlichen Nagelpräparates, bei dem wenigstens ein textiles Flächengebilde, mit wenigstens einem Kunstharz entlüftet wird. Und schließlich betrifft die Erfindung eine Vorrichtung zum Herstellen eines künstlichen Nagelpräparates mit wenigstens einer Strangzieheinrichtung.

Derartige Nagelpräparate dienen insbesondere der Verlängerung und/oder Verstärkung menschlicher Finger- und Fußnägel unter Aufbringung eines Modellagekunststoffes. Die künstlichen Nagelpräparate werden auch als Nageltips bezeichnet und sind beispielsweise aus der FR 2 846 861 A1, aus der deutschen Patentschrift DE 10 2008 039 109 B4, aus der deutschen Offenlegungsschrift DE 36 20 568 A1 oder der deutschen Gebrauchsmusteranmeldung 1 768 305 bekannt. Um ein Gewebe mit einem Kunstharz entlüften zu können, schlägt die deutsche Offenlegungsschrift DE 36 20 568 A1 vor, das Gewebe über eine offene Form zu spannen, die Form zu schließen und das Kunstharz an einer Stelle unterhalb des Gewebes in die Form einzuspritzen, so dass ein Teil des Gewebes vom Kunstharz durchdrängt und in diesem eingebettet wird. Die USamerikanische Patentschrift 4,860,774 beschreibt ebenfalls ein Verfahren zur Herstellung eines künstlichen Nagelpräparates, bei dem ein Fieberglasgewebe mit einer Kunstharz-Suspension besprüht, getrocknet, einseitig mit einem druckempfindlichen Adhäsiv beschichtet und mit der beschichteten Seite auf ein Haftauslösemittel gepresst wird. Eine Vorrichtung zum Herstellen eines künstlichen Nagelpräparates ist aus der US 7 185 660 B1 bekannt. Bekannte Nagelpräparate, die mit textilen Flächengebilden bewehrt sind, weisen Stärken auf, die die mit ihnen verlängerten Finger- oder Fußnägel unnatürlich stark erscheinen lassen. Zudem sind die bekannten Herstellungsverfahren nachteilig aufwendig und deshalb kostenintensiv.

Der Erfindung liegt deshalb die Aufgabe zugrunde, ein künstliches Nagelpräparat aufzuzeigen, mit dem an Finger- oder Fußnägeln hergestellte Verlängerungen ein besonders natürliches Erscheinungsbild erlangen sowie ein Verfahren und eine Vorrichtung aufzuzeigen, mit denen dieses Nagepräparat besonders kostengünstig und einfach herstellbar ist.

Diese Aufgabe ist erfindungsgemäß durch ein künstliches Nagelpräparat mit den Merkmalen des Patentanspruches 1, ein Verfahren zu dessen Herstellung mit den Merkmalen des Patentanspruches 8 sowie eine Vorrichtung zur Durchführung des Verfahrens mit den Merkmalen des Patentanspruches 14 gelöst. Vorteilhafte Weiterbildungen der Erfindung sind in den jeweils auf diese Patentansprüche rückbezogenen Unteransprüchen angegeben.

Das künstliche Nagelpräparat zeichnet sich dadurch aus, dass die Stärke des textilen Flächengebildes gleich der Stärke der Kunststofflage ist. Auf diese Weise liegt das in der Kunststofflage als Bewehrung fungierende textile Flächengebilde im gesamten Lagenquerschnitt der Kunstharzlage gleichmäßig verteilt, so dass einzelne Fasern des textilen Flächengebildes bis unmittelbar an die Oberflächen der Kunstharzlage heranreichen. Im Bereich dieses Heranreichens weist das textile Flächengebilde der freien Atmosphäre partiell ausgesetzte Faserrücken auf. Entsprechend der physikalischen Eigenschaften des für die Kunstharzlage verwendeten textilen Flächengebildes und des für die Kunstharzlage verwendeten Kunstharzes können an den Oberflächen der Kunstharzlage gelegene Faserrücken jedoch auch mit dem Kunstharz der Kunstharzlage benetzt sein. Durch die Einbindung des textilen Flächengebildes in die oberflächennahen Randbereiche der Kunstharzlage hinein ist insbesondere die Reißfestigkeit des erfindungsgemäßen Nagelpräparates vorteilhaft vergrößert. Die vergrößerte Reißfestigkeit erlaubt schließlich die Ausbildung der Kunstharzlage in besonders geringen Stärken, so dass ein mit dem erfindungsgemäßen Nagelpräparat verlängerter Fuß- oder Fingernagel einem natürlichen Fuß- oder Fingernagel sowohl in Bezug auf seine Flexibilität als auch in Bezug auf sein äußeres Erscheinungsbild besonders nahe kommt.

Nach einer ersten Weiterbildung des künstlichen Nagelpräparates weist die Kunstharzlage wenigstens ein Polyesterharz auf. Polyesterharze sind aufgrund ihrer transparenten und gegenüber Säuren und Basen weitgehend resistenten Eigenschaften besonders zur Ausbildung künstlicher Fuß- und Fingernägel geeignet. Grundsätzlich ist es jedoch ebenso denkbar, die Kunstharzlage mit Epoxidharzen, Acryllaten oder Polyurethanen auszubilden.

Um das künstliche Nagelpräparat in automatisierten Fertigungsprozessen besonders schnell, zuverlässig und kostengünstig aushärten zu können, wird vorgeschlagen, dass das Polyesterharz ein lichthärtendes Polyesterharz ist. Eine geeignete Alternative zu lichthärtenden Polyesterharzen sind beispielsweise wärmehärtende Polyesterharze.

Nach einer nächsten Weiterbildung der Erfindung ist das textile Flächengebilde ein Gewebe. Gewebe sind aufgrund ihrer geordneten Faserverläufe zur Ausbildung besonders leichter und reißfester Textilien geeignet. An dieser Stelle soll jedoch das Wirrfaservlies als eine geeignete Alternative zum Gewebe genannt sein.

Zur Ausbildung besonders kostengünstiger und gleichwohl belastungsfähiger Nagelpräparate weist das Gewebe vorzugsweise eine gitterartig ausgebildete Leinwandbindung auf. Weiterhin liegt es im Rahmen dieser Erfindung, die physikalischen Eigenschaften anderer Gewebearten verschiedenen Anforderungsprofilen zuzuordnen, die an Nagelpräparate gestellt werden.

In der Praxis haben sich textile Flächengebilde mit einem Flächengewicht von unter 27 Gramm pro Quadratmeter, vorzugsweise von unter 22 Gramm pro Quadratmeter bewährt. Hierzu wird vorgeschlagen, das textile Flächengebilde aus Seidenfasern zusammenzusetzen. Dabei können sowohl Naturseide als auch Kunstseide zum Einsatz gelangen. Eine erwähnenswerte Alternative besteht in der Ausbildung des textilen Flächengebildes aus Glasfasern.

Das erfindungsgemäße Verfahren zum Herstellen eines künstlichen Nagelpräparates zeichnet sich dadurch aus, dass das textile Flächengebilde in dem Kunstharz getaucht wird, dass das getauchte Flächengebilde unter Erzeugung eines Zwischenproduktes beidseitig mit wenigstens einem Folienmaterial belegt wird, dass das Zwischenprodukt reproduzierbar geformt wird, dass das im geformten Zwischenprodukt eingeschlossene Kunstharz ausgehärtet wird, und dass das Folienmaterial unter Erhalt von Nagelpräparat-Rohlingen vom ausgehärteten Kunstharz getrennt wird. Zum Tauchen des textilen Flächengebildes in dem Kunstharz wird mit diesem ein Kunstharzbad hergestellt, durch welches das textile Flächengebilde hindurchbewegt wird. Das erfindungsgemäße Herstellungsverfahren einleitend, wird das textile Flächengebilde mit dem Kunstharz geflutet. In jedem Fall ist das textile Flächengebilde beim Tauchen oder Fluten vollständig zu entlüften und wird durch das anschließende Belegen mit einem Folienmaterial darauf vorbereitet, dem Tauch- oder Flutungsbereich ohne eine neuerliche Belüftung als Zwischenprodukt entnommen zu werden. Zum reproduzierbaren Formen des Zwischenproduktes werden das Folienmaterial sowie das textile Flächengebilde insbesondere elastischen Verformungen ausgesetzt, während im flüssigen Kunstharz Verformungsspannungen abbauende Ausgleichsströmungen auftreten. Mit der nachfolgenden Aushärtung des flüssigen Kunstharzes erstarrt das in Form gehaltene Zwischenprodukt als Ganzes, so dass die Trennung des Folienmaterials vom ausgehärteten Kunstharz schließlich die formbeständigen Nagelpräparat-Rohlinge hervorbringt. Die Formbeständigkeit der Nagelpräparat-Rohlinge ist durch eine hohe Zugfestigkeit sowie ein hohes Elastizitätsmodul gekennzeichnet und ist insbesondere dadurch erreicht, dass das Folienmaterial unmittelbar auf das getauchte Flächengebilde gelegt wird, so dass die Stärke des textilen Flächengebildes gleich der Stärke der Kunstharzlage ist.

Nach einer ersten Weiterbildung des erfindungsgemäßen Verfahrens wird das Folienmaterial auf das untergetauchte textile Flächengebilde aufgewalzt. Das Aufwalzen des Folienmaterials erfolgt demnach zu einem Zeitpunkt, in welchem das textile Flächengebilde im flüssigen Kunstharz untergetaucht beziehungsweise von diesem geflutet ist. Mit dem Untertauchen oder Fluten wird das textile Flächengebilde besonders zuverlässig entlüftet. Mit dem Aufwalzen erfolgt eine flächige Aufbringung des Folienmaterials auf das textile Flächengebilde unter Ausbildung einer Vielzahl einzelner Kontaktpunkte.

Um zu verhindern, dass außerhalb des Tauch- oder Flutungsbereichs atmosphärische Luft über die das Folienmaterial begrenzenden Folienränder in das entlüftete textile Flächengebilde einziehen kann, wird das getauchte textile Flächengebilde in dem Folienmaterial luftdicht eingeschweißt. Grundsätzlich stellt jedoch auch das Einkleben oder ein anderweitiges Einhausen des textilen Flächengebildes mit dem Folienmaterial eine denkbare Möglichkeit dar. Mit der luftdichten Aufnahme des textilen Flächengebildes wird ein lagerfähiges Zwischenprodukt hergestellt, dessen Weiterverarbeitung zu den Nagelpräparat-Rohlingen vorteilhaft mit einem zeitlichen und/oder örtlichen Versatz erfolgen kann.

Zur Aushärtung des Kunstharzes wird das Folienmaterial mit einer ultravioletten Strahlung durchflutet. Dazu ist das Folienmaterial vorzugsweise eine transparente Eigenschaften aufweisende Kunststofffolie. Eine zu diesem Verfahrensschritt geeignete Alternative besteht in der Aushärtung des Kunstharzes mit einer Wärmestrahlung. Dazu ist das Folienmaterial beispielsweise eine Verbundfolie mit einer erhöhten Wärmleitfähigkeit.

Nach einer nächsten Weiterbildung der Erfindung wird das Zwischenprodukt ausschließlich an seinem luftdicht verschweißten Folienmaterial gehandhabt. Zur Handhabe wird das Zwischenprodukt beispielsweise an dem luftdicht verschweißten Folienmaterial getragen, geführt, gefasst oder getrieben.

Nach einer das erfindungsgemäße Verfahren abschließenden Weiterbildung werden die Nagelpräparat-Rohlinge in einzelne Nagelpräparate zerteilt. Zum Zerteilen werden aus den Nagelpräparat-Rohlingen vorzugsweise einzelne Nagelpräparate ausgeschnitten oder ausgestanzt. Optional können die Nagelpräparate dann verpackt und über den Handel vertrieben werden.

Die erfindungsgemäße Vorrichtung zum Herstellen eines künstlichen Nagelpräparates zeichnet sich dadurch aus, dass die Strangzieheinrichtung wenigstens zwei Folienbahnabzüge sowie wenigstens einen zwischen den Folienbahnabzügen angeordneten Textilbahnabzug aufweist, dass zwischen den Folienbahnabzügen wenigstens ein Kunstharztauchbecken ausgebildet ist, dass das Kunstharztauchbecken wenigstens eine Auslassöffnung mit einem Walzeneinzug aufweist, mit welchem die Folienbahnabzüge und der Textilbahnabzug zu einer Fertigungsstrecke zusammengeführt sind, und dass die Fertigungsstrecke wenigstens ein Formwerkzeug mit einer Kunstharz-Durchlaufhärtung aufweist. Die Folienbahnabzüge sowie der Textilbahnabzug weisen jeweils eine Drehlageranordnung zur Aufnahme einer Wickelware auf. Im Falle der Folienbahnabzüge ist die Wickelware ein vorzugsweise auf Rollen, Spulen oder Trommeln aufgewickeltes Folienmaterial und im Falle des Textilbahnabzugs ist die Wickelware ein vorzugsweise auf Rollen, Spulen oder Trommeln aufgewickeltes textiles Flächengebilde. Das zwischen den Folienbahnabzügen ausgebildete Kunstharztauchbecken dient der Bevorratung flüssigen Kunstharzes und dem Eintauchen eines über den Textilbahnabzug in die erfindungsgemäße Vorrichtung transportierten textilen Flächengebildes in das flüssige Kunstharz. Der Walzeneinzug hat die Aufgabe, das getauchte textile Flächengebilde unter Erzeugung eines Zwischenproduktes beidseitig mit dem Folienmaterial zu belegen, welches über die Folienbahnzüge in die erfindungsgemäße Vorrichtung transportiert wird. Über die Auslassöffnung wird das am Walzeneinzug hergestellte Zwischenprodukt über die Fertigungsstrecke zu einem Formwerkzeug gezogen, in welchem es reproduzierbar geformt und durch Aushärtung des in ihm eingeschlossenen Kunstharzes in der gehaltenen Form stabilisiert wird. Mit der Strangzieheinrichtung ist die erfindungsgemäße Vorrichtung zum kontinuierlichen Herstellen künstlicher Nagelpräparate besonders geeignet. Die beiden Folienbahnabzüge bilden hierbei eine Handhabeeinrichtung aus, mit welcher das Zwischenprodukt durch die Fertigungsstrecke kontinuierlich hindurchgezogen wird. Das Formwerkzeug weist vorzugsweise eine kontinuierliche Arbeitsweise auf, wobei den Gesenken des Formwerkzeuges vorzugsweise eine an die Abzuggeschwindigkeit der Folienbahnabzüge angepasste Gesenknachführung zugeordnet ist. Eine derartige Gesenknachführung ist vorzugsweise durch die Ausbildung einer mehrere Obergesenke aufweisenden Umlaufführung und einer mehrere Untergesenke aufweisenden Umlaufführung hergestellt. Grundsätzlich ist es jedoch ebenso denkbar, das Formwerkzeug nach Art einer aus kontinuierlich arbeiteten Stranggießvorrichtungen bekannten Kokille auszubilden.

Nach einer ersten Weiterbildung der erfindungsgemäßen Vorrichtung weist das Kunstharztauchbecken wenigstens zwei aus Bahnabschnitten der Folienbahnabzüge ausgebildete Beckenbegrenzungen auf. Die an den Beckenbegrenzungen hergestellte Tauchbeckenabdichtung erfolgt erst über das in den Folienbahnabzügen transportierte Folienmaterial. Auf diese Weise wird das Folienmaterial lediglich einseitig mit dem im Kunstharztauchbecken bevorrateten Kunstharz kontaktiert, so dass der an der Auslassöffnung des Kunstharztauchbeckens ausgebildete Walzeneinzug, das Formwerkzeug sowie andere an der Fertigungsstrecke gelegene Bearbeitungsstationen frei von Verunreinigungen durch das flüssige Kunstharz bleiben.

Zur Herstellung einer zwischen den Folienbahnabzügen ausgebildeten Tauchbeckenabdichtung weist das Kunstharztauchbecken außerdem wenigstens zwei über Gleitdichtungen flüssigkeitsdicht mit den Beckenbegrenzungen zusammenwirkende Verbindungsteile auf. Derartige Verbindungsteile sind vorzugsweise als unbewegliche Tauchbeckenwandungen ausgebildet, an denen das in den Folienbahnabzügen transportierte Folienmaterial flüssigkeitsdicht abläuft.

Nach einer nächsten Weiterbildung der Erfindung weist das Kunstharztauchbecken eine mit einem der Folienbahnabzüge und in Abzugsrichtung flach geneigt ausgebildete Beckenwandung auf. Im inneren des Kunstharztauchbeckens verlaufen der die flach geneigte Beckenwandung ausbildende Folienbahnabzug sowie der Textilbahnabzug unmittelbar nebeneinander, so dass ein in dem Textilbahnabzug transportiertes textiles Flächengebilde unter einem besonders flachen Winkel in das im Kunstharztauchbecken bevorratete flüssige Kunstharz eintaucht. Mit dem flachen Eintauchwinkel ist vorteilhaft verhindert, dass von dem textilen Flächengebilde atmosphärische Luft in Form von Lufteinschlüssen in das flüssige Kunstharz eingetragen wird.

Nach einer besonders vorteilhaften Weiterbildung der Erfindung ist den Folienbahnabzügen wenigstens eine zwischen dem Walzeneinzug und dem Formwerkzeug angeordnete Folienschweißstation zugeordnet, die wenigstens zwei, jeweils auf einen der Randbereiche der Fertigungsstrecke ausgerichtete Längsschweißköpfe aufweist. Die Längsschweißköpfe dienen dem randseitigen Verschweißen des das textile Flächengebilde beidseitig belegenden Folienmaterials. Durch das kontinuierliche Ziehen des Zwischenproduktes durch die Fertigungsstrecke hindurch wird das in den Folienbahnabzügen transportierte Folienmaterial durch die randseitige Anordnung der Längsschweißköpfe zu einem Folienschlauch miteinander verschweißt. Außerdem weist die Folienschweißstation wenigstens einen an der Fertigungsstrecke ausgerichteten Querschweißkopf auf, der dem stirnseitigen Verschweißen des das textile Flächengebilde beidseitig belegenden Folienmaterials dient. Zusammen mit den Längsschweißköpfen erlaubt der Querschweißkopf das vollständig luftdichte Einschweißen des textilen Flächengebildes in das Folienmaterial.

Zum kontinuierlichen Ziehen des Zwischenproduktes durch die Fertigungsstrecke hindurch weisen die Folienbahnabzüge wenigstens eine dem Formwerkzeug vorgeschaltete Antriebseinheit auf, die wenigstens ein an der Fertigungsstrecke ausgerichtetes Transportwalzenpaar hat. Die Übertragung der von der Antriebseinheit erzeugten Antriebskräfte auf das Zwischenprodukt erfolgt vorzugsweise über Haftreibungskräfte, die zwischen einer Gummierung des Transportwalzenpaares und dem Folienmaterial des Zwischenproduktes aufgebaut werden.

Nach einer nächsten Weiterbildung der Erfindung weist die Fertigungsstrecke eine dem Formwerkzeug nachgeschaltete Entformungsstation auf, der wenigstens zwei, jeweils mit einem der Folienbahnabzüge wirkverbundene Folienbahnwickler zugeordnet sind. Die Folienbahnwickler haben die Aufgabe, das Folienmaterial unter Erhalt der Nagelpräparat-Rohlinge von dem ausgehärteten Kunstharz in einer geordneten Weise zu trennen. Die Trennung erfolgt vorzugsweise über einen Abziehprozess, über welchen das Folienmaterial über Umlenkrollen aus der Fertigungsstrecke herausgeführt wird. Um die Nagelpräparat-Rohlinge von dem ausgehärteten Kunstharz trennen zu können, weist die Entformungsstation außerdem eine Schneideinrichtung auf, mit welcher die randseitig am Zwischenprodukt gelegenen Verschweißungen abgeschnitten werden.

Um die Nagelpräparat-Rohlinge in einzelne Nagelpräparate zerteilen zu können, ist der Entformungsstation wenigstens eine Schneideinrichtung nachgeschaltet, die wenigstens eine an der Fertigungsstrecke ausgerichtete Querschneide aufweist. Die Schneideinrichtung weist vorzugsweise ebenfalls eine kontinuierliche Arbeitsweise auf, wobei der Querschneide vorzugsweise eine an die Abzugsgeschwindigkeit der Folienbahnabzüge angepasste Schneidennachführung zugeordnet ist. Eine derartige Schneidennachführung ist beispielsweise durch die Aufnahme der Querschneide an einem Rotationskörper hergestellt, an dessen Umfang dann vorzugsweise mehrere Querschneiden gehalten sind.

Ein Ausführungsbeispiel der Erfindung, aus dem sich weitere erfinderische Merkmale ergeben, ist in der Zeichnung dargestellt. Es zeigen:
- Fig. 1:: eine perspektivische Teildarstellung eines erfindungsgemäßen künstlichen Nagelpräparates;
- Fig. 2:: eine schematische Darstellung eines ersten Teils der erfindungsgemäßen Vorrichtung zur Herstellung des Nagelpräparates gemäß Fig. 1; und
- Fig. 3:: eine schematische Darstellung eines zweiten Teils der erfindungsgemäßen Vorrichtung gemäß Fig. 2.

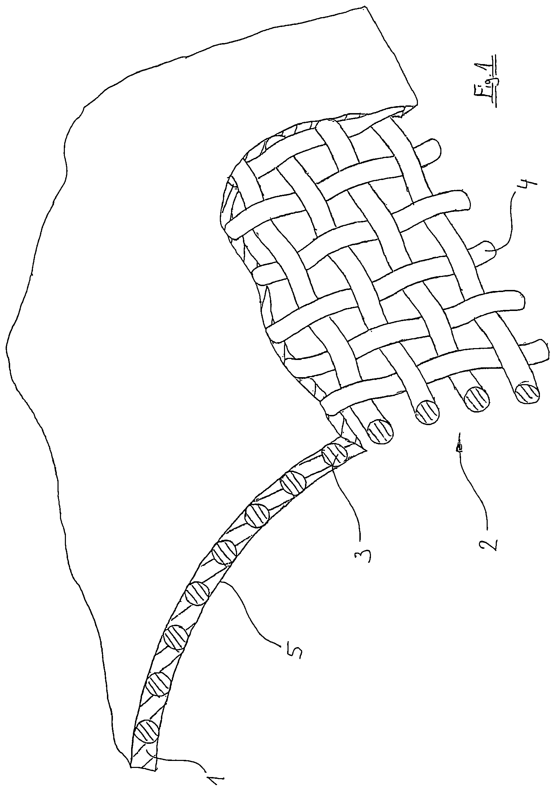

Die Fig. 1 zeigt einen Teil eines erfindungsgemäßen künstlichen Nagelpräparates mit einer Kunstharzlage 1 und einem in die Kunstharzlage 1 eingegossenen textilen Flächengebilde 2. Die Stärke des textilen Flächengebildes 2 ist gleich der Stärke der Kunstharzlage 1, welche aus einem Polyesterharz besteht. Das textile Flächengebilde 2 ist ein eine Leinwandbindung aufweisendes Gewebe mit einem Flächengewicht von 20 g pro m². Das textile Flächengebilde 2 ist aus einzelnen Seidenfasern 3, 4 zusammengesetzt. Insgesamt weist das künstliche Nagelpräparat an das Nagelbett eines menschlichen Fuß- oder Fingernagels angepasste gekrümmte Auflagefläche 5 auf.

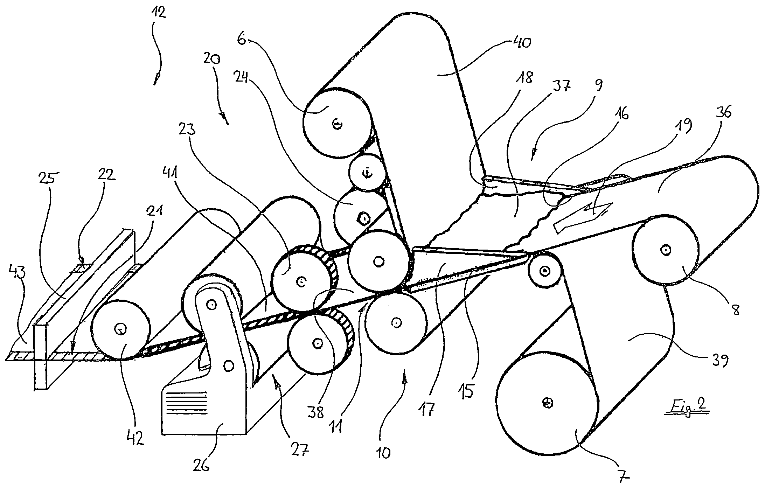

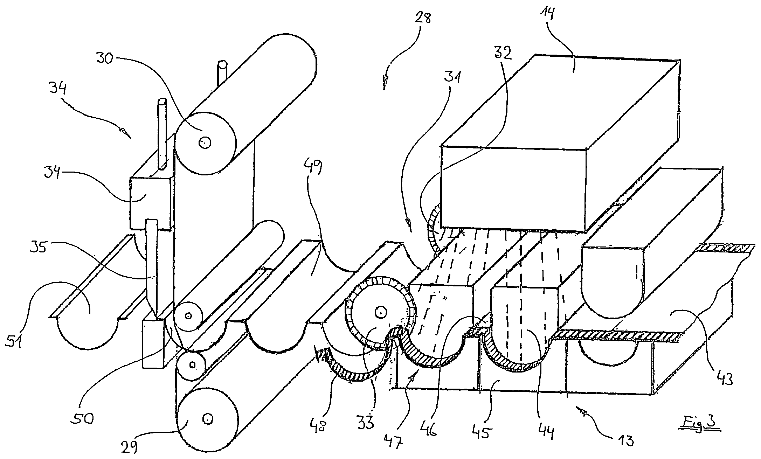

Die Fig. 2 und 3 zeigen die erfindungsgemäße Vorrichtung mit einer Strangzieheinrichtung, die zwei Folienbahnabzüge 6, 7 sowie einen zwischen den Folienbahnabzügen 6, 7 angeordneten Textilbahnabzug 8 aufweist. Zwischen den Folienbahnabzügen 6, 7 ist ein Kunstharztauchbecken 9 ausgebildet, welches eine mit einem Walzeneinzug 10 ausgebildete Auslassöffnung 11 aufweist. Über den Walzeneinzug 10 sind die Folienbahnabzüge 6, 7 und der Textilbahnabzug 8 zu einer Fertigungsstrecke 12 zusammengeführt, die ein Formwerkzeug 13 mit einer Kunstharz-Durchlaufhärtung 14 aufweist. Das Kunstharztauchbecken 9 weist zwei aus Bahnabschnitten der Folienbahnabzüge 6, 7 ausgebildete Beckenbegrenzungen sowie zwei über Gleitdichtungen 15, 16 flüssigkeitsdicht mit den Beckenbegrenzungen zusammenwirkende Verbindungsteile 17, 18 auf. Eine der mit den Folienbahnabzügen 6, 7 ausgebildete Beckenbegrenzung stellt eine in Abzugsrichtung gemäß Pfeil 19 flach geneigt ausgebildete Beckenwandung dar. Den Folienbahnabzügen 6, 7 ist eine zwischen dem Walzeneinzug 10 und dem Formwerkzeug 13 angeordnete Folienschweißstation 20 zugeordnet, die zwei, jeweils auf einen der Randbereiche 21, 22 der Fertigungsstrecke 12 ausgerichtete Längsschweißköpfe 23, 24 sowie einen Querschweißkopf 25 aufweist. Die Folienbahnabzüge 6, 7 weisen eine zwischen der Folienschweißstation 20 und dem Formwerkzeug 13 angeordnete Antriebseinheit 26 auf, die ein an der Fertigungsstrecke 12 ausgerichtetes Transportwalzenpaar 27 hat. Dem Formwerkzeug 13 nachgeschaltet, weist die Fertigungsstrecke 12 eine Entformungsstation 28 mit zwei, jeweils mit einem der Folienbahnabzüge 6, 7 wirkverbundenen Folienbahnwicklern 29, 30 auf. Außerdem weist die Entformungsstation 28 eine den Folienbahnwicklern 29, 30 vorgeschaltete Schneideinrichtung 31 auf, die zwei, jeweils mit einem der Randbereiche 21, 22 der Fertigungsstrecke 12 in Eingriff stehende Längsschneiden 32, 33 hat. Der Entformungsstation 28 ist eine weitere Schneideinrichtung 34 nachgeschaltet, die eine an der Fertigungsstrecke 12 ausgerichtete Querschneide 35 hat.

Die erfindungsgemäße Vorrichtung arbeitet wie folgt:
Ein im Textilbahnabzug 8 zwischen den Folienbahnabzügen 6, 7 bewegtes textiles Flächengebilde 36 wird in einem im Kunstharztauchbecken 9 bevorrateten flüssigen Kunstharz 37 getaucht. Über den an der Auslassöffnung 11 des Kunstharztauchbeckens 9 ausgebildeten Walzeneinzug 10 wird das untergetauchte textile Flächengebilde 36 unter Erzeugung eines Zwischenprodukts 38 beidseitig mit einem Folienmaterial 39, 40 belegt, das dem Walzeneinzug 10 über die Folienbahnabzüge 6, 7 zugeführt wird. Nachfolgend wird das Zwischenprodukt über die Fertigungsstrecke 12 einer dem Walzeneinzug 10 nachgeschalteten Folienschweißstation 20 zugeführt, mit deren Längsschweißköpfen 23, 24 das Folienmaterial 39, 40 randseitig zu einem Folienschlauch miteinander verschweißt wird. Mit dem Transportwalzenpaar 27 der den Längsschweißköpfen, 23, 24 nachgeschalteten Antriebseinheit 26 wird das randseitig verschweißte Zwischenprodukt 41 über die Fertigungsstrecke 12 hinweggezogen und über eine Umlenkrolle 42 am Querschweißkopf 25 vorbeigeführt. Mit dem Querschweißkopf 25 wird das Folienmaterial 39, 40 auch stirnseitig miteinander verschweißt, so dass das textile Flächengebilde 36 des bereits randseitig verschweißten Zwischenproduktes 41 in seinem Folienmaterial 39, 40 vollständig luftdicht eingeschweißt werden kann. In dem der Folienschweißstation 20 nachgeschalteten Formwerkzeug 13 wird das rand- und stirnseitig verschweißte Zwischenprodukt 43 zwischen einzelnen Obergesenken 44 und mit diesen korrespondierenden Untergesenken 45 reproduzierbar geformt, wobei das im geformten Zwischenprodukt 46 eingeschlossene flüssige Kunstharz 37 in der am Formwerkzeug 13 ausgebildeten Kunstharz-Durchlaufhärtung 14 mit einer UV-Strahlung ausgehärtet wird. Mit den Längsschneiden 32, 33 der dem Formwerkzeug 13 in der Entformungsstation 28 nachgeschalteten Schneideinrichtung 31 werden von dem ausgehärteten Zwischenprodukt 47 zwei Randstreifen 48 abgetrennt, in denen die mit den Längsschweißköpfen 23, 24 hergestellten Verschweißungen gelegen sind. Mit den der Schneideinrichtung 31 nachgeschalteten Folienbahnwicklern 29, 30 wird dann das Folienmaterial 39, 40 des von den Randstreifen 48 befreiten Zwischenproduktes 49 unter Erhalt von Nagelpräparat-Rohlingen 50 vom ausgehärteten Kunstharz 37 abgezogen. Mit der Querschneide 35 der der Entformungsstation 28 nachgeschalteten Schneideinrichtung 34 werden die Nagelpräparat-Rohlinge 50 schließlich in einzelne Nagelpräparate 51 zerteilt.

## Patentansprüche

1. Künstliches Nagelpräparat mit wenigstens einer Kunstharzlage und einem in die Kunstharzlage eingegossenen textilen Flächengebilde,
**dadurch gekennzeichnet,**
**dass** die Stärke des textilen Flächengebildes (2) gleich der Stärke der Kunstharzlage (1) ist.

2. Künstliches Nagelpräparat nach Anspruch 1, **dadurch gekennzeichnet, dass** die Kunstharzlage (1) wenigstens ein Polyesterharz aufweist.

3. Künstliches Nagelpräparat nach Anspruch 2, **dadurch gekennzeichnet, dass** das Polyesterharz ein lichthärtendes Polyesterharz ist.

4. Künstliches Nagelpräparat nach einem der Ansprüche 1 bis 3, **dadurch gekennzeichnet, dass** das textile Flächengebilde (2) ein Gewebe ist.

5. Künstliches Nagelpräparat nach Anspruch 4, **dadurch gekennzeichnet, dass** das Gewebe eine Leinwandbindung aufweist.

6. Künstliches Nagelpräparat nach einem der Ansprüche 1 bis 5, **dadurch gekennzeichnet, dass** das textile Flächengebilde (2) ein Flächengewicht von unter 27 Gramm pro Quadratmeter aufweist.

7. Künstliches Nagelpräparat nach einem der Ansprüche 1 bis 6, **dadurch gekennzeichnet, dass** das textile Flächengebilde (2) aus Seidenfasern (3, 4) zusammengesetzt ist.

8. Verfahren zum Herstellen eines künstlichen Nagelpräparates, bei dem wenigstens ein textiles Flächengebilde mit wenigstens einem flüssigen Kunstharz entlüftet wird,
**dadurch gekennzeichnet,**
**dass** das textile Flächengebilde (36) in dem flüssigen Kunstharz (37) getaucht wird,
**dass** das getauchte textile Flächengebilde (36) unter Erzeugung eines Zwischenprodukts (38) beidseitig mit wenigstens einem Folienmaterial (39, 40) belegt wird,
**dass** das Zwischenprodukt (38) reproduzierbar geformt wird,
**dass** das im geformten Zwischenprodukt (46) eingeschlossene flüssige Kunstharz (37) ausgehärtet wird, und
**dass** das Folienmaterial (39, 40) unter Erhalt von Nagelpräparatrohlingen (50) vom ausgehärteten Kunstharz (37) getrennt wird.

9. Verfahren nach Anspruch 8, **dadurch gekennzeichnet, dass** das Folienmaterial (39, 40) auf das untergetauchte textile Flächengebilde (36) aufgewalzt wird.

10. Verfahren nach Anspruch 9 oder 10, **dadurch gekennzeichnet, dass** das getauchte textile Flächengebilde (36) in dem Folienmaterial (39, 40) luftdicht eingeschweißt wird.

11. Verfahren nach einem der Ansprüche 8 bis 10, **dadurch gekennzeichnet, dass** das Folienmaterial (39, 40) zur Aushärtung des Kunstharzes (37) mit einer ultravioletten Strahlung durchflutet wird.

12. Verfahren nach Anspruch 10 oder 11, **dadurch gekennzeichnet, dass** das Zwischenprodukt (38, 41, 43) an seinem luftdicht verschweißten Folienmaterial (39, 40) gehandhabt wird.

13. Verfahren nach einem der Ansprüche 8 bis 12, **dadurch gekennzeichnet, dass** die Nagelpräparat-Rohlinge (50) in einzelne Nagelpräparate (51) zerteilt werden.

14. Vorrichtung zum Herstellen eines künstlichen Nagelpräparates mit wenigstens einer Strangzieheinrichtung, insbesondere zur Durchführung eines Verfahrens nach einem der Ansprüche 8 bis 13,
**dadurch gekennzeichnet,**
**dass** die Strangzieheinrichtung wenigstens zwei Folienbahnabzüge (6, 7) sowie wenigstens einen zwischen den Folienbahnabzügen (6, 7) angeordneten Textilbahnabzug (8) aufweist,
**dass** zwischen den Folienbahnabzügen (6, 7) wenigstens ein Kunstharztauchbecken (9) ausgebildet ist,
**dass** das Kunstharztauchbecken (9) wenigstens eine Auslassöffnung (11) mit einem Walzeneinzug (10) aufweist, mit welchem die Folienbahnabzüge (6, 7) und der Textilbahnabzug (8) zu einer Fertigungsstrecke (12) zusammengeführt sind, und
**dass** die Fertigungsstrecke (12) wenigstens ein Formwerkzeug (13) mit einer Kunstharz-Durchlaufhärtung (14) aufweist.

15. Vorrichtung nach Anspruch 14, **dadurch gekennzeichnet, dass** das Kunstharztauchbecken (9) wenigstens zwei aus Bahnabschnitten der Folienbahnabzüge (6, 7) ausgebildete Beckenbegrenzungen aufweist.

16. Vorrichtung nach Anspruch 15, **dadurch gekennzeichnet, dass** das Kunstharztauchbecken (9) wenigstens zwei über Gleitdichtungen (15, 16) flüssigkeitsdicht mit den Beckenbegrenzungen zusammenwirkende Verbindungsteile (17, 18) aufweist.

17. Vorrichtung nach einem der Ansprüche 14 bis 16, **dadurch gekennzeichnet, dass** das Kunstharztauchbecken (9) eine mit einem der Folienbahnabzüge (6, 7) und in Abzugsrichtung flach geneigt ausgebildete Beckenwandung aufweist.

18. Vorrichtung nach einem der Ansprüche 14 bis 17, **dadurch gekennzeichnet, dass** den Folienbahnabzügen (6, 7) wenigstens eine dem Formwerkzeug (13) vorgeschaltete Folienschweißstation (20) zugeordnet ist, die wenigstens zwei, jeweils auf einen der Randbereiche (21, 22) der Fertigungsstrecke (12) ausgerichtete Längsschweißköpfe (23, 24) aufweist.

19. Vorrichtung nach einem der Ansprüche 14 bis 18, **dadurch gekennzeichnet, dass** die Folienbahnabzüge (6, 7) wenigstens eine zwischen der Folienschweißstation (20) und dem Formwerkzeug (13) angeordnete Antriebseinheit (26) aufweisen, die wenigstens ein an der Fertigungsstrecke (12) ausgerichtetes Transportwalzenpaar (27) hat.

20. Vorrichtung nach einem der Ansprüche 14 bis 19, **dadurch gekennzeichnet, dass** die Fertigungsstrecke (12) eine dem Formwerkzeug (13) nachgeschaltete Entformungsstation (28) aufweist, der wenigstens zwei, jeweils mit einem der Folienbahnabzüge (6, 7) wirkverbundene Folienbahnwickler (29, 30) zugeordnet sind.

21. Vorrichtung nach Anspruch 20, **dadurch gekennzeichnet, dass** der Entformungsstation (28) wenigstens eine Schneideinrichtung (34) nachgeschaltet ist, die wenigstens eine an der Fertigungsstrecke (12) ausgerichtete Querschneide (35) aufweist.

## Claims

1. Artificial nail preparation with at least one resin layer and a fabric cast in the resin layer,
**characterised in that**
the thickness of the textile fabric (2) is equal to the thickness of the resin layer (1).

2. Artificial nail preparation according to claim 1, **characterised in that** the resin layer (1) comprises at least one polyester resin.

3. Artificial nail preparation according to claim 2, **characterised in that** the polyester resin is a readily curable polyester resin.

4. Artificial nail preparation according to any one of claims 1 to 3, **characterised in that** the textile fabric (2) is a woven fabric.

5. Artificial nail preparation according to claim 4, **characterised in that** the woven fabric has a plain weave.

6. Artificial nail preparation according to any one of claims 1 to 5, **characterised in that** the textile fabric (2) has a grammage less than 27 grams per square meter.

7. Artificial nail preparation according to any one of claims 1 to 6, **characterised in that** the textile fabric (2) is made up of silk fibres (3, 4).

8. Method for producing an artificial nail preparation, in which at least one textile fabric is deaerated with at least one liquid synthetic resin
**characterised in that**
the textile fabric (36) is immersed in the liquid synthetic resin (37),
the immersed textile fabric (36) is coated with at least one foil material (39, 40) on both sides to produce an intermediate product (38),
the intermediate product (38) is moulded in reproducible manner,
the liquid synthetic resin (37) enclosed in the moulded intermediate product (46) is cured, and
the foil material (39, 40) is separated from the cured synthetic resin (37) to obtain nail preparation blanks (50).

9. Method according to claim 8, **characterised in that** the foil material (39, 40) is rolled onto the immersed textile fabric (36).

10. Method according to claim 9 or 10, **characterised in that** the immersed textile fabric (36) is welded in airtight manner inside the foil material (39, 40).

11. Method according to any one of claims 8 to 10, **characterised in that** the foil material (39, 40) is flooded with ultraviolet radiation to cure the resin (37).

12. Method according to claim 10 or 11, **characterised in that** the intermediate product (38, 41, 43) is handled by the airtight sealed foil material (39, 40) thereof.

13. Method according to any one of claims 8 to 12, **characterised in that** the nail preparation blanks (50) are split up into individual nail preparations (51).

14. Device for producing an artificial nail preparation comprising at least one strand pulling device, particularly for carrying out a method according to any one of claims 8 to 13,
**characterised in that**
the strand pulling device has at least two film web drawing devices (6, 7) and at least one textile web drawing device (8) arranged between the film web drawing devices (6, 7),
at least one artificial resin immersion tank (9) is arranged between the foil web drawing devices (6, 7),
the synthetic resin immersion tank (9) has at least one outlet opening (11) with an infeed roll (10), with which the foil web drawing devices (6, 7) and the textile web drawing device (8) are brought together to form a production line (12), and
the production line (12) includes at least one moulding tool (13) with a continous feed synthetic resin curing device (14).

15. Device according to claim 14, **characterised in that** the synthetic resin immersion tank (9) includes at least two tank delimiting elements which are formed by web sections from the foil web drawing devices (6, 7).

16. Device according to claim 15, **characterised in that** the synthetic resin immersion tank (9) includes at least two connecting parts (17, 18) which cooperate in liquid-tight manner with the tank delimiting elements via sliding seals (15, 16).

17. Device according to any one of claims 14 to 16, **characterised in that** the synthetic resin immersion tank (9) has a tank wall which is slightly inclined with respect to one of the foil web drawing devices (6, 7) in the drawing direction.

18. Device according to any one of claims 14 to 17, **characterised in that** at least one foil welding station (20) upstream of the moulding tool (13) is assigned to the foil web drawing devices (6, 7), and the foil welding station(s) have/has at least two longitudinal welding heads (23, 24), each of which is aligned with one of the edge regions (21, 22) of the production line (12).

19. Device according to any one of claims 14 to 18, **characterised in that** the foil web drawing drawing devices (6, 7) have at least one drive unit (26) disposed between the foil welding station (20) and the moulding tool (13), which drive unit has at least one transport roller pair (27) aligned with the production line (12).

20. Device according to any one of claims 14 to 19, **characterised in that** the production line (12) includes a demoulding station (28) downstream of the moulding tool (13), which station has least two foil web winding devcies (29, 30), each of which is operatively connected to one of the foil web drawing drawing devices (6, 7).

21. Device according to claim 20, **characterised in that** at least one cutting device (34) is arranged downstream of the demoulding station (28) and has at least one cross-cutter (35) aligned relative to the production line (12).

## Revendications

1. Préparation pour ongles artificiels avec au moins une couche de résine synthétique et une structure textile plane coulée dans la couche de résine synthétique,
**caractérisé en ce que**
l'épaisseur de la structure textile plane (2) est identique à l'épaisseur de la couche de résine synthétique (1).

2. Préparation pour ongles artificiels selon la revendication 1, **caractérisé en ce que** la couche de résine synthétique (1) comporte au moins une résine polyester.

3. Préparation pour ongles artificiels selon la revendication 2, **caractérisé en ce que** la résine polyester est une résine poyester photopolymérisable.

4. Préparation pour ongles artificiels selon l'une quelconque des revendications 1 à 3, **caractérisé en ce que** das structure textile plane (2) ein Gewebe ist.

5. Préparation pour ongles artificiels selon la revendication 4, **caractérisé en ce que** le tissu comporte une armure toile.

6. Préparation pour ongles artificiels selon l'une quelconque des revendications 1 à 5, **caractérisé en ce que** la structure textile plane (2) présente un grammage de moins de 27 grammes au mètre carré.

7. Préparation pour ongles artificiels selon l'une quelconque des revendications 1 à 6, **caractérisé en ce que** la structure textile plane (2) est composée de fibres de soie (3, 4).

8. Procédé destiné à fabriquer une préparation pour ongles artificiels, lors duquel on désaère une structure textile plane avec au moins une résine synthétique liquide,
**caractérisé**
**en ce qu'**on plonge la structure textile plane (36) dans la résine synthétique liquide (37),
qu'en créant un produit intermédiaire (38), on recouvre de part et d'autre la structure textile plane (36) d'au moins une matière en film (39, 40),
**en ce qu'**on façonne le produit intermédiaire (38) de manière reproductible,
**en ce qu'**on fait durcir la résine synthétique liquide (37) incluse dans le produit intermédiaire (46) et
**en ce qu'**on désolidarise la matière en film (39, 40) de la résine synthétique (37) durcie en obtenant des ébauches (50) de préparation pour ongles.

9. Procédé selon la revendication 8, **caractérisé en ce qu'**on lamine la matière en film (39, 40) sur la structure textile plane (36) immergée.

10. Procédé selon la revendication 9 ou 10, **caractérisé en ce qu'**on soude la structure textile plane (36) de manière étanche à l'air dans la matière en film (39, 40).

11. Procédé selon l'une quelconque des revendications 8 à 10, **caractérisé en ce que** pour faire durcir la résine synthétique (37), on irradie la matière en film (39, 40) avec un rayonnement ultraviolet.

12. Procédé selon la revendication 10 ou 11, **caractérisé en ce qu'**on manipule le produit intermédiaire (38, 41, 43) par sa matière en film (39, 40) soudée de manière étanche à l'air.

13. Procédé selon l'une quelconque des revendications 8 à 12, **caractérisé en ce qu'**on divise les ébauches de préparation pour ongles (50) en préparations pour ongles (51) individuelles.

14. Dispositif destiné à fabriquer une préparation pour ongles artificiels avec au moins un système d'extrusion inverse, notamment pour réaliser un procédé selon l'une quelconque des revendications 8 à 13,
**caractérisé**
**en ce que** le système d'extrusion inverse comporte au moins deux systèmes de retrait (6, 7) de la bande de film, ainsi qu'au moins un système de retrait (8) de bande textile placé entre les systèmes de retrait (6, 7) de la bande de film,
**en ce qu'**entre les systèmes de retrait (6, 7) de la bande de film est conçu au moins un bac d'immersion (9) dans la résine synthétique,
**en ce que** le bac d'immersion (9) dans la résine synthétique comporte au moins une ouverture de sortie (11) avec un système d'insertion à rouleau (10) à l'aide duquel les systèmes de retrait (6, 7) de la bande de film (6, 7) et le système de retrait (8) de bande textile sont réunis en une ligne de fabrication (12) et
**en ce que** la ligne de fabrication (12) comporte au moins un outil de formage (13) avec un système de durcissement continu (14) de résine synthétique.

15. Dispositif selon la revendication 14, **caractérisé en ce que** le bac d'immersion (9) dans la résine synthétique comporte au moins deux délimitations de bac conçues à partir de segments de bandes des systèmes de retrait (6, 7) de la bande de film.

16. Dispositif selon la revendication 15, **caractérisé en ce que** le bac d'immersion (9) dans la résine synthétique comporte au moins deux parties d'assemblage (17, 18) coopérant de manière étanche aux liquides par l'intermédiaire de joints glissants (15, 16) avec les délimitations de bac.

17. Dispositif selon l'une quelconque des revendications 14 à 16, **caractérisé en ce que** le bac d'immersion (9) dans la résine synthétique comporte une paroi de bac conçue en étant inclinée à plat dans la direction de retrait avec l'un des systèmes de retrait (6, 7) de la bande de film.

18. Dispositif selon l'une quelconque des revendications 14 à 17, **caractérisé en ce qu'**aux systèmes de retrait (6, 7) de la bande de film est associé au moins un poste de soudage (20) de film monté en amont de l'outil de formage (13), qui comporte au moins deux têtes de soudage (23, 24) longitudinales orientées chacune sur l'une des régions marginales (21, 22) de la ligne de fabrication (12).

19. Dispositif selon l'une quelconque des revendications 14 à 18, **caractérisé en ce que** les systèmes de retrait (6, 7) de la bande de film comportent au moins une unité d'entraînement (26) placée entre le poste de soudage (20) de film et l'outil de formage (13), qui dispose d'au moins une paire de rouleaux de transport (27) orientée sur la ligne de fabrication (12).

20. Dispositif selon l'une quelconque des revendications 14 à 19, **caractérisé en ce que** la ligne de fabrication (12) comporte un poste de démoulage (28) monté en aval de l'outil de formage (13) auquel sont associés au moins deux dérouleurs (29, 30) de la bande de film fonctionnellement reliés avec l'un des systèmes de retrait (6, 7) de la bande de film.

21. Dispositif selon la revendication 20, **caractérisé en ce qu'**en aval du poste de démoulage (28) est monté au moins un système de coupe (34), qui comporte au moins une lame transversale (35) orientée sur la ligne de fabrication (12).
